# EUROPÄISCHE PATENTSCHRIFT

(11) **EP 0 569 767 B1**
(45) Veröffentlichungstag und Bekanntmachung des Hinweises auf die Patenterteilung: **03.01.1996**
(21) Anmeldenummer: 93106758.1
(22) Anmeldetag: 27.04.1993
(51) Int. Cl.: B26D 7/26

(54) **Messerhalter**
Knife support
Support de couteau

(30) Priorität: 13.05.1992 DE 4215736; 12.12.1992 DE 4241957
(43) Veröffentlichungstag der Anmeldung: 18.11.1993
(73) Patentinhaber: SCHOBER GmbH Werkzeug- und Maschinenbau, D-71735 Eberdingen (DE)
(72) Erfinder: Wittmaier, Klaus, W-7143 Vaihingen/Enz 7 (DE); Bäzner, Peter, W-7132 Illingen-Schützingen (DE); Kostewa, Horst, W-7143 Vaihingen/Enz (DE)
(74) Vertreter: Steimle, Josef, Dipl.-Ing.

(56) Entgegenhaltungen:
- EP-A- 0 163 402
- EP-A- 0 294 536
- EP-A- 0 443 362
- DE-A- 3 637 733
- DE-A- 3 917 345
- DE-B- 1 242 816
- DE-C- 310 796
- US-A- 2 472 184
- US-A- 3 908 499
- US-A- 4 706 386

## Beschreibung

Die Erfindung betrifft einen Messerhalter entsprechend den Oberbegriffen der Ansprüche 1, 4 und 6. (EP-A-0163402)
Derartige Messerhalter sind in einer Vielzahl bekannt. Sie werden in der Regel zum Beschneiden der Seitenkanten von endlosen Papierbahnen verwendet, sie werden jedoch auch eingesetzt, um in Längsrichtung verlaufende Perforationen in die Bahnen einzuschneiden. Hierfür werden die Messerhalter an einer Befestigungsstange angeklemmt und drücken über den Anstellarm mit ihrem Messer auf die über einen drehenden Zylinder geführte endlose Bahn. Da sich das Messer beim Beschneiden bzw. Perforieren der Bahnen abnutzt, ist dieses auswechselbar an der Messerhaltevorrichtung befestigt. Als nachteilig hat sich herausgestellt, daß das Messer nur unter Zuhilfenahme eines Werkzeugs von der Messerhaltevorrichtung lösbar ist. Dies ist einerseits umständlich, andererseits bei mehreren eng beieinander liegenden Messerhaltern oftmals nicht durchführbar, da das Werkzeug nicht an die Messerhaltevorrichtung herangeführt werden kann. Ferner hat sich gezeigt, daß die bekannten Messerhalter relativ breit sind, so daß der Abstand zwischen einzelnen Perforationen bzw. Schnitten ebenfalls relativ groß ist bzw. eng beieinander liegende Schnitte bzw. Perforationen mit diesen bekannten Messerhaltern nur dann ausgeführt werden können, wenn sie nicht nebeneinander sondern hintereinander angeordnet werden. Hierfür sind dann jedoch ebenfalls mehrere sich drehende Zylinder erforderlich, über die die zu bearbeitenden Bahnen geführt werden.

Aus den DE-GM 84 27 036, DE-GM 91 05 289 und DE 30 42 472 A1 sind Messerhalter bekannt. Beim Messerhalter des DE-GM 91 05 289 wird das Messer von einem Verschlußelement eines Schnellspannverschlusses gehalten, welches sich an einem Lager abstützt. Zur spielfreien Lagerung des Messers müssen das Verschlußelement auf die Abmessungen des Schneidmessers und das Lager auf die Abmessung des Verschlußelements abgestimmt werden, was nicht nur aufwendig und kostspielig ist, sondern oftmals zu Fehlfunktionen führt, da die Bauteile klemmen.

Der Erfindung liegt daher die Aufgabe zugrunde, einen Messerhalter der eingangs genannten Art derart auszubilden, daß dieser robust, schmal und einfacher bedienbar ist.

Die Aufgabe wird erfindungsgemäß dadurch gelöst, daß die Messerhaltevorrichtung einen das Messer durchgreifenden und zentrierenden Aufnahmedorn mit einem Anlageflansch für das Messer sowie einen Schnellspannverschluß aufweist. (Ansprüche 1, 4 oder 6)

Durch die erfindungsgemäße Ausbildung des Messerhalters bzw. der Messerhaltevorrichtung mit einem Schnellspannverschluß kann innerhalb kürzester Zeit das abgenutzte Messer gegen ein neues ausgetauscht werden, wobei hierfür keinerlei Werkzeug erforderlich ist. Ein einfaches Einsetzen des Messers in die Messerhaltevorrichtung wird dadurch erzielt, daß es auf den Aufnahmedorn soweit aufgeschoben wird, bis das Messer am Anlageflansch anliegt. Dabei nimmt das Messer eine definierte Lage ein.

Zur Sicherung des Messers auf der Messerhaltevorrichtung weist der Aufnahmedorn das Messer hintergreifende und gegen ein Abheben vom Anlageflansch sichernde, insbesondere radial verschiebliche Elemente auf. Über diese Elemente wird das Messer nach dem Aufschieben auf den Aufnahmedorn gesichert. Hierdurch wird gewährleistet, daß auch Bahnen mit unebenen Oberflächen exakt geschnitten bzw. perforiert werden können, ohne daß sich die Lage des Messers auf der Messerhaltevorrichtung ändert bzw. sich das Messer von der Messerhaltevorrichtung löst.

Bevorzugt sind die Elemente als Stifte, Klauen oder Abschnitte des Aufnahmedorns ausgebildet. Bei als Stifte ausgebildeten Elementen sind diese aus dem Aufnahmedorn radial ausfahrbar und hintergreifen das Messer, so daß sich dieses nicht mehr vom Auflageflansch lösen kann.

Bei einer Weiterbildung ist vorgesehen, daß der Aufnahmedorn eine zentrale Ausnehmung aufweist, die zentrale Ausnehmung von das Messer hintergreifenden Elementen umgeben ist und in der Ausnehmung eine Stellvorrichtung für die Elemente vorgesehen ist. Durch diese Stellvorrichtung werden die das Messer hintergreifenden Elemente von einer Ruhelage in eine Arbeitslage überführt, wobei sie in der Ruhelage das Messer freigeben und in der Arbeitslage das Messer auf dem Anlageflansch sichern. Bevorzugt ist die Ausnehmung als Durchbruch ausgebildet.

Bei einem bevorzugten Ausführungsbeispiel ist die Stellvorrichtung als in der Ausnehmung drehbar gelagerte Welle mit einem Polygonquerschnitt ausgebildet. Dabei ist vorteilhaft jede Ecke des Polygons einem Element, insbesondere einem radial verschieblich gelagerten Stift zugeordnet. Eine derart ausgebildete Stellvorrichtung hat den Vorteil, daß sie einerseits relativ einfach herstellbar, andererseits die Verlagerung der das Messer sichernden Elemente relativ problemlos durchführbar ist. Liegt die Ecke des Polygons z.B. an einem Stift an, so wird dieser teilweise aus dem Aufnahmedorn verlagert und sichert das Messer auf dem Aufnahmeflansch. Liegt der Stift in dem Bereich zwischen zwei Ecken an der Welle an, dann wird er z.B. durch Federkraft so weit in den Aufnahmedorn eingeschoben, daß er das Messer freigibt.

Eine zusätzliche Halterung des Messers wird dadurch erzielt, daß der Anlageflansch mit einem Permanentmagnet für die Halterung des Messers am Anlageflansch versehen ist. Dies hat den Vorteil, daß bei einem Messerwechsel das neue Messer bereits mit einer gewissen Kraft am Anlageflansch gehalten wird, ohne daß hierfür die Stifte in ihre Arbeitsstellung verlagert werden müssen. Die Stifte dienen bei dieser Ausführungsform lediglich als Sicherungsstifte.

Um relativ eng beieinander liegende Schnitte erzielen zu können, ist bei einem Ausführungsbeispiel vorgesehen, daß der Aufnahmedorn das Messer mit einem Abschnitt überragt, der im wesentlichen der Dicke der Elemente entspricht. Bevorzugt überragt der Abschnitt das Messer um 3 mm bis 8 mm, insbesondere um 4 mm. Es können also bei gegenseitigem Einbau zweier Messerhalter ein Schneidenabstand der beiden Messer von 6 mm bis 16 mm insbesondere von 8 mm bis 10 mm erzielt werden. Auf diese Weise sind eng aneinander liegende Perforationen oder Längsschnitte erzielbar.

Ein weiterer Vorteil des erfindungsgemäßen Messerhalters besteht darin, daß die Gesamtbreite der Messerhaltevorrichtung 30 mm bis 50 mm, insbesondere 39 mm beträgt. Durch diese geringe Gesamtbreite können sehr schmale Schneid- oder Perforationslinien in Materialbahnen eingebracht werden.

Ein einfacher und schneller Messerwechsel wird dadurch gefördert, daß der Schnellspannverschluß ohne Werkzeug betätigbar ist.

Erfindungsgemäß weist der Schnellspannverschluß ein flexibles Auflager für unterschiedlich dicke Messer auf. Dies hat den Vorteil, daß bei einem Messerwechsel auch Messer verwendet werden können, die gegenüber dem Vorherigen eine andere Dicke aufweisen. Vorteilhaft wird dadurch die Lagerhaltung der Messer erleichtert und es werden für unterschiedlich dicke Messer keine verschiedenen Messerhaltevorrichtungen benötigt.

Vorzugsweise wird das Auflager von mehreren federnd gelagerten Kugeln gebildet. Bei dickeren Messern federn die Kugeln ein und bei dünneren Messern treten die Kugeln aus ihren Federlagerungen hervor, so daß auf diese Weise die Messer sicher und spielfrei gehalten werden.

Bei einem bevorzugten Ausführungsbeispiel ist der Schnellspannverschluß der Messerhaltevorrichtung als Bajonettverschluß ausgebildet. Ein Bajonettverschluß hat den Vorteil, daß er eine relativ einfache Mechanik aufweist und relativ einfach zu bedienen ist. Vorzugsweise wird der Bajonettverschluß von einer das Messer auf ein Auflager pressenden, von den Bajonettstiften der Welle des Messerhalters hintergriffenen Bajonettscheibe gebildet. Diese Bajonettscheibe muß zum Wechseln des Messer lediglich geringfügig gegenüber der Welle der Messerhaltevorrichtung verdreht werden, und kann von der Welle abgezogen werden. Das Messer kann dann gegen ein neues ausgetauscht werden, welches durch Aufsetzen der Bajonettscheibe, die lediglich geringfügig gegenüber der Welle der Messerhaltervorrichtung verdreht werden muß, festgehalten wird. Der Wechsel eines Messers ist somit denkbar einfach und kann ohne Zuhilfenahme von Werkzeug schnell durchgeführt werden.

Bei einer anderen Ausführungsform ist der Schnellspannverschluß der Messerhaltevorrichtung als Krallenspanneinheit ausgebildet, die ein- und ausfahrbare und das Messer auf ein Auflager der Messerhaltevorrichtung pressende Krallen aufweist. Die Krallenspanneinheit hat den Vorteil, daß ein Messerwechsel ebenfalls ohne Werkzeug durchführbar ist, und beim Wechseln des Messers kein Bauteil vom Messerhalter entfernt werden muß. Der Messerhalter wird also beim Messerwechsel nicht zerlegt.

Bei einer Weiterbildung ist vorgesehen, daß die Krallenspanneinheit einen koaxialen, in axialer Richtung federbelasteten Stößel aufweist, daß der Stößel einen Spannkopf trägt und daß der Spannkopf seinen Außenumfang überragende Krallen aufweist, die über die Kraft des federbelasteten Stößels das Messer in einem Auflager der Messerhaltevorrichtung fixieren. Außerdem ist der Stößel in axialer Richtung verschiebbar, wodurch die Krallen innerhalb des Außenumfangs des Spannkopfes eingezogen werden. Für einen Messerwechsel muß der Stößel also lediglich in axialer Richtung bewegt werden, wobei die Federkraft der Spannfeder überwunden werden muß. Dabei werden die Krallen, die das Messer auf das Auflager der Messerhaltevorrichtung pressen, eingezogen. Das Messer kann dann über den Spannkopf der Krallenspanneinheit abgezogen und gegen ein neues Messer ausgetauscht werden.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im einzelnen beschrieben sind. Dabei zeigen:
- Figur 1: einen Längsschnitt durch eine Messerhaltevorrichtung gemäß der Erfindung entlang der Linie I-I gemäß Figur 2; und
- Figur 2: eine Draufsicht auf die Messerhaltevorrichtung gemäß Figur 1 in Richtung des Pfeils II bei abgenommenem Messer.
- Figur 3: einen Längsschnitt durch eine Ausführungsform einer einen Bajonettverschluß aufweisenden Messerhaltevorrichtung;
- Figur 4: eine Draufsicht auf die Messerhaltevorrichtungen gemäß der Fig. 3 in Richtung des Pfeils IV;
- Figur 5: einen Längsschnitt durch eine weitere Ausführungsform einer eine Krallenspanneinheit aufweisenden Messerhaltevorrichtung;
- Figur 6: eine Draufsicht auf die Messerhaltevorrichtung gemäß Fig. 5 in Richtung des Pfeils VI;
- Figur 7: einen Längsschnitt durch eine weitere Ausführungsform einer Messerhaltevorrichtung; und
- Figur 8: eine Draufsicht auf die Messerhaltevorrichtung gemäß Fig. 7 in Richtung des Pfeils VIII.

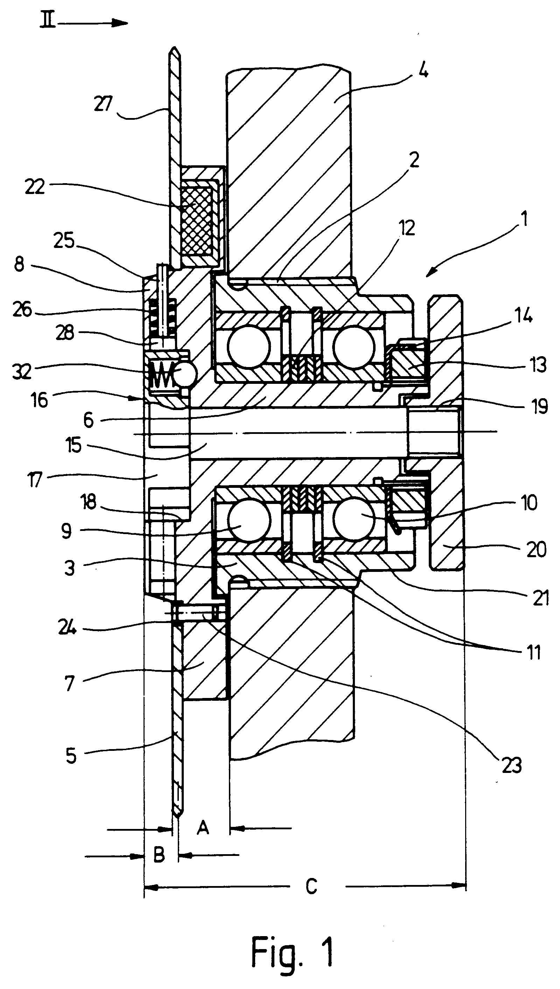

In der Figur 1 ist eine insgesamt mit 1 bezeichnete Messerhaltevorrichtung im Längsschnitt wiedergegeben, die über ein Gewinde 2, welches an einer Gewindehülse 3 vorgesehen ist, in einen Anstellarm 4 eingeschraubt ist. Mit der Gewindehülse 3 kann der Abstand A der Schneide eines Messers 5 vom Anstellarm 4 exakt eingestellt werden. Ein Eindrehen bzw. Ausdrehen der Gewindehülse 3 im Gewinde 2 des Anstellarms 4 erfolgt über einen gerändelten Abschnitt 21 der Gewindehülse 3. Diese Gewindehülse 3 ist von einer Welle 6 durchgriffen, die an ihrem einen Ende einen Anlagenflansch 7 sowie einen Aufnahmedorn 8 für das Messer 5 aufweist. Die Welle 6 ist über zwei Wälzlager 9 und 10, die über Sicherungsringe 11 und Paßscheiben 12 in der Gewindehülse 3 angeordnet sind, drehbar in dieser gelagert. Über eine Wellenmutter 13, welche über ein Sicherungsblech 14 gegen Lösen gesichert ist, ist die Welle 6 festgelegt.

Wie aus Figur 1 ersichtlich, ist die Welle 6 mit einer zentralen Bohrung versehen, in der eine weitere Welle 15 einer insgesamt mit 16 bezeichneten Stellvorrichtung gelagert ist. Die Welle 15 weist an ihrem einen Ende einen Wellenabschnitt mit einem Polygonquerschnitt auf, der als Stellorgan 17 dient. Dieses Stellorgan 17 befindet sich in einer Ausnehmung 18 des Aufnahmedorns 8. Das andere Ende der Welle 15 ist mit einem Gewinde 19 versehen, auf dem eine Rändelscheibe 20 aufgeschraubt ist. Über die Rändelscheibe 20 kann die Welle 15 und somit das Stellorgan 17 in der Welle 6 bzw. im Aufnahmedorn 8 gedreht werden.

Zur Festlegung des Messers 5 an der Messerhaltevorrichtung 1 ist der Aufnahmeflansch 7 mit insgesamt drei gleichmäßig verteilt angeordneten Permanentmagneten 22 versehen, die das Messer 5 dicht am Anlageflansch 7 halten. Ferner ist ein Zylinderstift 23 in den Anlageflansch 7 eingelassen, der ein Verdrehen des Messers 5 auf dem Anlageflansch 7 um den Aufnahmedorn 8 verhindert. Dieser Zylinderstift 23 überragt die Oberfläche des Anlageflansches 7 und greift in eine Öffnung 24 des Messers 5.

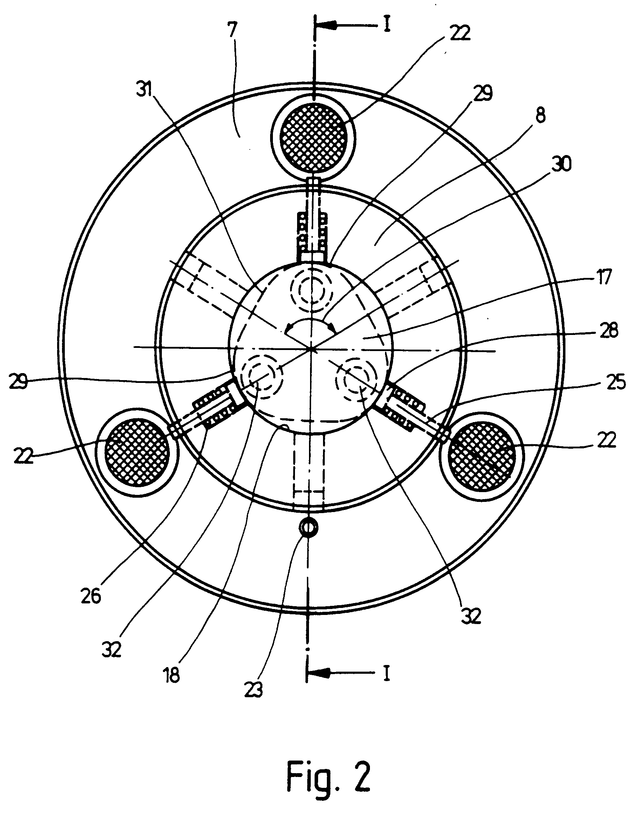

Der Aufnahmedorn 8 ist mit insgesamt drei gleichmäßig verteilt angeordneten Sicherungsstiften 25 versehen, die in radialen Bohrungen des Aufnahmedorns 8 radial verschieblich geführt sind. Das radial innere Ende eines jedes Sicherungsstifts 25 ist mit einem Fuß 28 versehen, so daß an diesem eine Druckfeder 26 angreifen kann, die den Sicherungsstift 25 radial nach innen drängt. Die den Sicherungsstift 25 aufnehmende Bohrung ist derart angeordnet, daß der Sicherungsstift 25 einerseits das Messer 5 hintergreift, andererseits an der dem Anlageflansch 7 abgewandten Oberfläche 27 des Messers 5 anliegt. Der Fuß 28 des Sicherungsstifts 25 wird von der Druckfeder 26 bei der in den Figuren 1 und 2 gezeigten Stellung des Stellorgans 17 auf eine Ecke 29 gedrängt. In dieser Stellung tritt das gegenüberliegende Ende des Sicherungsstifts 25 geringfügig über den Umfang des Aufnahmedorns 8 hervor und hintergreift das Messer 5, wodurch dieses auf dem Aufnahmeflansch 7 gesichert wird.

Wird das Stellorgan über die Rändelscheibe in eine Richtung des Doppelpfeils 30 (Figur 2) um 60° verdreht, dann liegt der Fuß 28 in einem Abschnitt 31 zwischen zwei Ecken 29 am Stellorgan 17 an, und ist radial nach innen verlagert. Durch diese radiale Verlagerung des Sicherungsstiftes 25 nach innen wird der Sicherungsstift 25 soweit in den Aufnahmedorn 8 eingezogen, daß das Messer 5 nicht mehr hintergriffen wird. Es ist nun vom Anlageflansch 7 entfernbar.

Die in den Figuren 1 und 2 gezeigte Lage des Stellorgans 17 sowie die um 60° verdrehte Lage wird über ein federndes Druckstück 32 stabilisiert, welches aus einer federbelasteten Kugel besteht. Diese Kugel wird über die Feder in eine Ausnehmung gedrängt, wie es in der Figur 1 dargestellt ist. Eine weitere Ausnehmung befindet sich auf gleicher radialer Höhe, jedoch um 60° verdreht.

Aus der Figur 1 ist deutlich erkennbar, daß die Höhe des Aufnahmedorns 8 nur geringfügig größer ist, als die Dicke eines Sicherungsstiftes 25. Auf diese Weise wird ein relativ kleiner Abstand B zwischen der Außenkante der Messerhaltevorrichtung 1 und der Schneide des Messers 5 erreicht. Ferner ist erkennbar, daß die Gesamtbreite C der Messerhaltevorrichtung 1 ebenfalls sehr gering ist und bei dem gezeigten Ausführungsbeispiel 39 mm beträgt. Insbesondere überragen keine Teile der Stellvorrichtung 16 die Außenkante der Messerhaltevorrichtung 1 im Bereich des Messers 5.

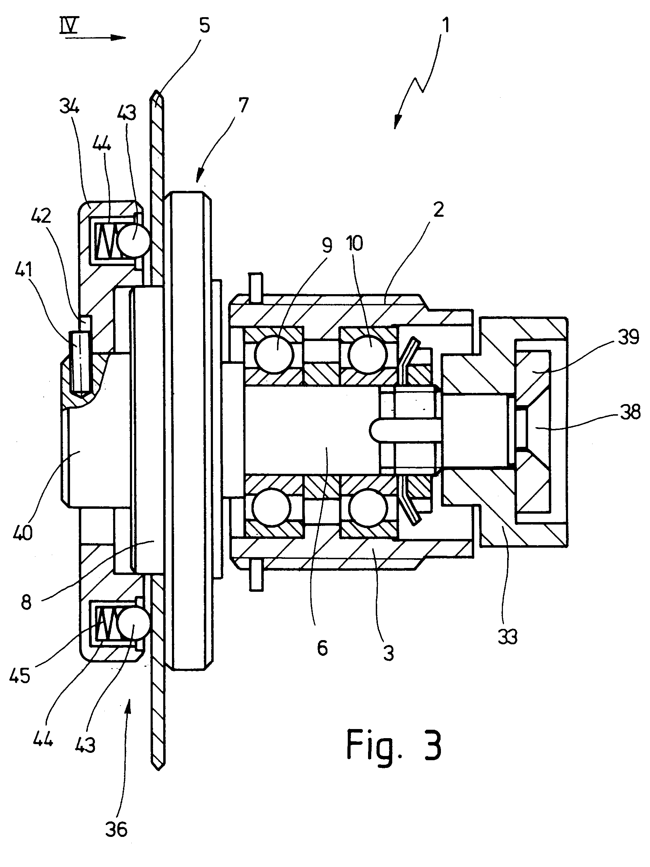

Die Fig. 3 zeigt ein Ausführungsbeispiel einer einen Bajonettverschluß 36 aufweisenden Messerhaltevorrichtung 1. Bei dieser Ausführungsform ist die Welle 15 über zwei Wälzlager 9 und 10 in der Gewindehülse 3 gelagert. Die Welle 15 überragt die Gewindehülse 3 an beiden axialen Enden und trägt am einen Ende einen Gegenhalter 33, der über eine Schraube 38 und eine Scheibe 39 axial aufgeschraubt ist, und an ihrem anderen Ende den Anlageflansch 7 zur Lagerung des Messers 5. Das axiale Ende 40 der Welle 15 ist mit radial angeordneten Bajonettstiften 41 versehen, die das axiale Ende 40 radial überragen. Ferner ist auf das axiale Ende 40 eine Bajonettscheibe 34 aufgesetzt, die von den Bajonettstiften 41 hintergriffen wird, wobei die Bajonettstifte 41 in Vertiefungen 42 der Bajonettscheibe 34 liegen. An der dem Kreismesser 5 zugewandten Seite weist die Bajonettscheibe 34 federnd gelagerte Kugeln 43 auf, die in einer Lageraufnahme 44 gelagert und gegen ein Herausfallen gesichert sind und von einer Feder 45 druckbeaufschlagt sind. Über diese Kugeln 43 wird das Kreismesser 5 gegen den Anlageflansch 7 gepreßt. Vorteilhaft können über die in der Lageraufnahme 44 verschieblich geführten Kugeln Kreismesser 5 mit unterschiedlicher Dicke gespannt werden. Eine Zentrierung sowohl des Kreismessers 5 als auch der Bajonettscheibe 34 erfolgt über den Aufnahmedorn 8 des Anlageflanschs 7, über den sowohl das Kreismesser 5 als auch die Bajonettscheibe 34 zentriert werden.

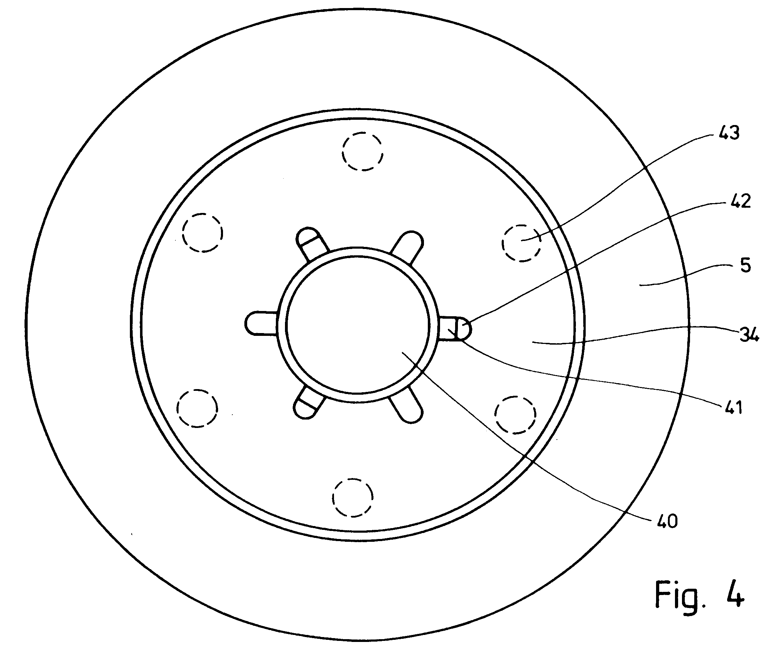

Die Fig. 4 zeigt eine Draufsicht auf die Bajonettscheibe 34 mit dahinterliegendem Kreismesser 5, wobei andeutungsweise die Kugeln 43 mit gestrichelten Linien dargestellt sind. Deutlich erkennbar sind die in den Vertiefungen 42 liegenden Bajonettstifte 41.

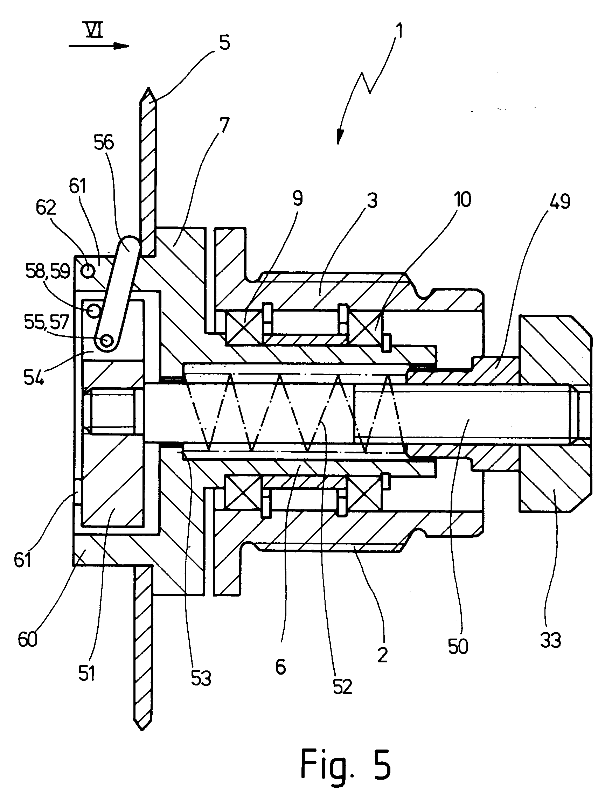

Bei dem in der Fig. 5 dargestellten Ausführungsbeispiel einer Messerhaltevorrichtung 1 ist die Gewindehülse 3 ebenfalls von einer Welle 15 durchgriffen. Auch diese Welle 15 stützt sich über zwei Wälzlager 9 und 10 drehbar an der Gewindehülse 3 ab. An dem dem Kreismesser 5 gegenüberliegenden axialen Ende ist ein Gegenhalter 33 vorgesehen. Dieser Gegenhalter 33 ist über ein Ansatzstück 49 axial verschieblich in der als Hohlwelle ausgebildeten Welle 15 gelagert und durchgreift die Welle 15 über einen Stößel 50. Dieser Stößel 50 trägt am einen Ende den Gegenhalter 33 und am anderen Ende einen Spannkopf 51, über den das Kreismesser 5 auf den Anlageflansch 7 gepreßt wird. Innerhalb der als Hohlwelle ausgebildeten Welle 15 ist um den Stößel 50 eine Druckfeder 52 angeordnet, deren eines Ende an einer radial nach innen gerichteten Schulter 53 der Hohlwelle 15 anliegt und ihr anderes Ende an dem in die Hohlwelle 15 eingreifenden Ende des Ansatzstücks 49 anliegt. Da das Ansatzstück 49 fest mit dem Stößel 50 z.B. durch eine Verschraubung verbunden ist, und der Stößel 50 axial verschieblich in der Welle 15 gelagert ist, wird über die Druckfeder 52 der Stößel 50 und mit ihm der Spannkopf 51 nach rechts gedrängt. Eine Verlagerung des Stößels 50 in die andere Richtung erfolgt durch manuelles Eindrücken des Gegenhalters 33 in Richtung auf die Gewindehülse 3.

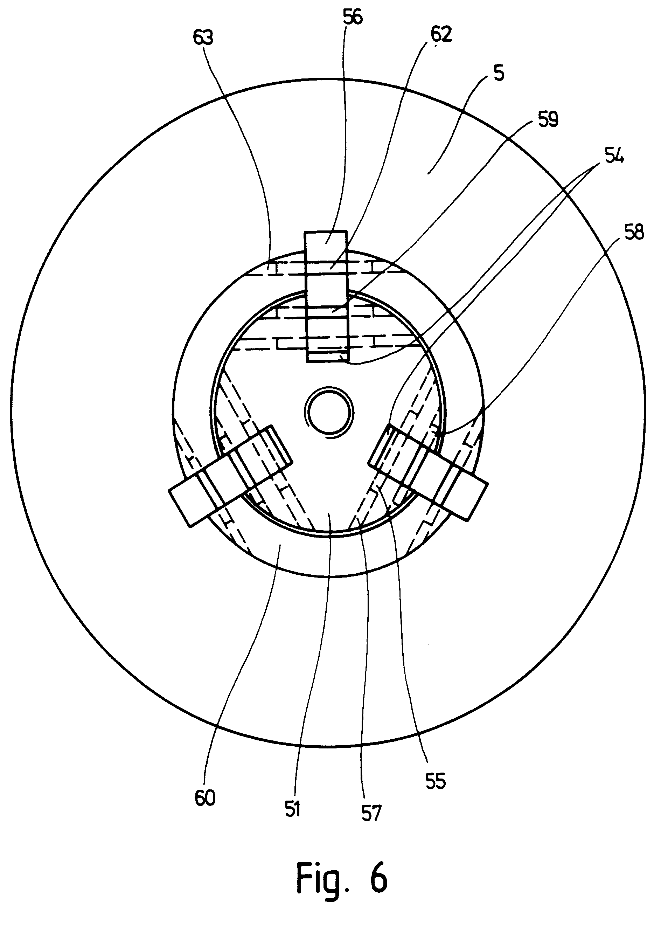

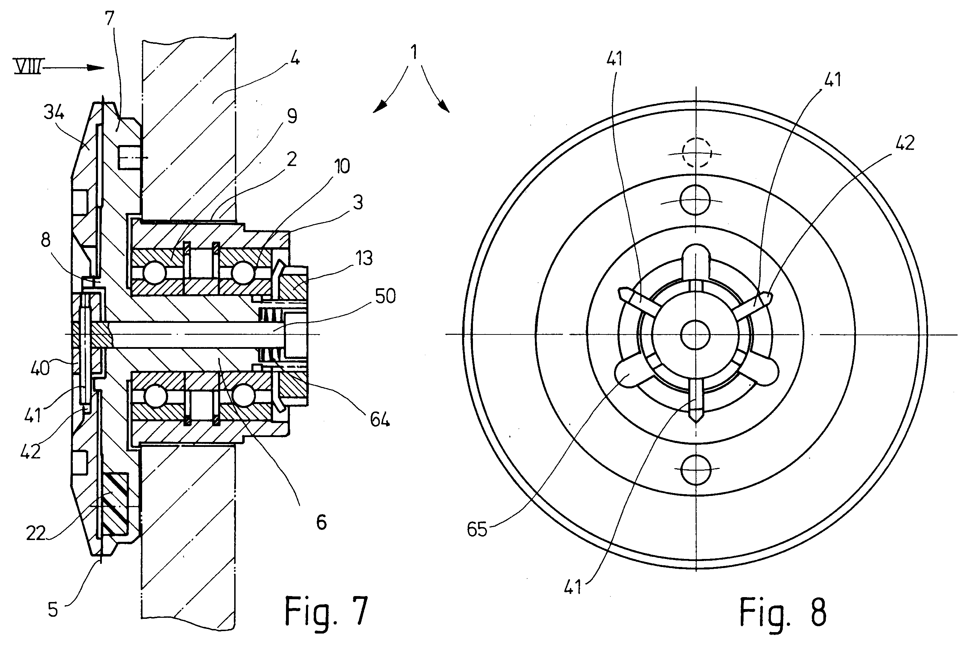

Der Spannkopf 51 weist, wie in der Fig. 6 dargestellt, drei Ausnehmungen 54 auf, die beim Ausführungsbeispiel der Fig. 7 und 8 radial nach außen gerichtet sind. In diesen Ausnehmungen 54 sind jeweils über einen Bolzen 55 jeweil eine Kralle 56 schwenkbar gelagert. Der Bolzen 55 ist, wie in der Fig. 6 wiedergegeben in einer im Spannkopf 51 vorgesehenen Bohrung 57 gelagert. Diese Bohrung 57 ist so angebracht, daß sie die Ausnehmung 54 im radial inneren Bereich schneidet. Außerdem ist eine zur Bohrung 57 achsparallele Bohrung 58 vorgesehen, die die Ausnehmung 54 ebenfalls schneidet. Diese Bohrung 58 befindet sich radial weiter außen als die Bohrung 57, wie dies deutlich in Fig. 5 und in Fig. 6 erkennbar ist. Außerdem befindet sich die Bohrung 58 axial weiter außen als die Bohrung 57, was der Fig. 5 zu entnehmen ist. In diese Bohrung 58 ist ebenfalls ein Bolzen 59 eingesetzt, der die Kralle 56 in Querrichtung übergreift. Der Bolzen 59 dient als Gegenlager für die auf dem Kreismesser 5 aufliegende Kralle 56, die sich am Bolzen 59 abstützt. Die Kralle 56 wird über den Bolzen 59 daran gehindert, entgegen dem Uhrzeigersinn um dem Bolzen 55 zu verschwenken (Fig. 5). Die Länge der Kralle 56 ist dabei so gewählt, daß sie den Spannkopf 51 radial überragt und einen den Spannkopf 51 aufnehmenden und als Teil des Aufnahmeflansches 32 ausgebildeten Ringansatz 60 über eine Ausnehmung 61 durchgreift. Diese Ausnehmung 61 ist in axialer Richtung von einem dritten Bolzen 62 verschlossen, der in eine zu den Bohrungen 57 und 58 achsparallel liegenden Bohrung 63 eingesetzt ist. Die Kralle 56 kann sich also innerhalb der Ausnehmung 61 zwischen deren Grund und dem Bolzen 62 bewegen.

Wird nun durch Eindrücken des Gegenhalters 33 in Richtung der Gewindehülse 3 der Stößel 50 innerhalb der Welle 15 axial nach links verschoben, so verlagert sich der Spannkopf 51 bezüglich des Ringansatzes 60 des Anlageflansches 7. Dabei hebt die Kralle 56 von der Oberfläche des Kreismessers 5 ab, da sie mit dem Spannkopf 51 ebenfalls nach links bewegt wird. Nach einer gewissen Wegstrecke schlägt die Kralle 56 am Bolzen 62 an und wird bei einer Weiterverschiebung des Spannkopfes 51 nach links allmählich im Uhrzeigersinn um den Bolzen 55 gedreht. Dabei wird die Kralle 56 allmählich in die Ausnehmung 61 eingezogen. Dies erfolgt solange, bis die Kralle 56 den Ringansatz 60 radial nicht mehr überragt. Nun kann das Kreismesser 5 über den Ringansatz 60 geschoben und gegen ein neues ausgetauscht werden. Dieses neue Kreismesser 5 wird, wie in der Fig. 5 dargestellt, auf den Ringansatz 60 aufgeschoben, bis es am Anlageflansch 7 anliegt. Dann wird der Druck auf den Gegenhalter 33 reduziert, so daß die Druckfeder 52 den Stößel 50 nach rechts bewegt. Dadurch wird der Spannkopf 51 und mit diesem die Kralle 56 ebenfalls nach rechts bewegt. Nach einer gewissen Wegstrecke liegt die Kralle 56 am Grund der Ausnehmung 61 an und wird nun um den Bolzen 55 entgegen dem Uhrzeigersinn verschwenkt. Dabei tritt sie allmählich aus der Ausnehmung 61 heraus und überragt den Ringansatz 60. Die Kralle 56 liegt dann auf der Oberfläche des Kreismessers 5 auf. Diese Verschwenkbewegung um den Bolzen 55 entgegen dem Uhrzeigersinn erfolgt solange, bis der Bolzen 58 auf der Kralle 56 aufliegt und diese mit der Kraft der Druckfeder 52 auf die Oberfläche des Kreismesser 5 anpreßt. Das Kreismesser 5 wird auf diese Weise über die drei Krallen 56 sicher und spielfrei am Anlageflansch 7 gehalten. Durch die bewegliche Anordnung der Krallen 56 am Spannkopf 51 können auch Kreismesser 5 mit unterschiedlichen Dicken gespannt werden. Diese Ausgestaltung einer Messerhaltevorrichtung 1 hat den wesentlichen Vorteil, daß sie für einen Messerwechsel nicht in Einzelteile zerlegt werden muß.

Mit den erfindungsgemäßen Messerhaltevorrichtungen 1 können Kreismesser 5 mit einem Innendurchmesser von 15 mm bis 100 mm gespannt werden. Außerdem sind Kreismesser 5 montierbar mit einer Messerdicke von 1 mm bis 5 mm.

Bei dem in den Fig. 7 und 8 dargestellten Ausführungsbeispiel wird das Messer 5 vom Aufnahmedorn 8 durchgriffen und liegt am Anlageflansch 7 an. Dort wird es von drei gleichmäßig über den Umfang verteilt angeordnete Permanentmagnete 22 gehalten. Eine Sicherung des Messers erfolgt über die Bajonettscheibe 34, die von radial angeordneten Bajonettstiften 41 gehalten wird. Diese Bajonettstifte 41 befinden sich an einem axialen Ende 40 des Stößels 50, der die Welle 15 axial durchgreift. Der Stößel 50, z.B. ein in das axiale Ende 40 eingeschraubter Haltebolzen, wird über mehrere Tellerfedern 64 derart belastet, daß er über die Bajonettstifte 41 die Bajonettsscheibe 34 in Richtung auf das Messer 5 und den Anlageflansch 7 drängt. Auf diese Weise wird das Messer 5 sicher am Anlageflansch 7 gehalten. Zum Lösen des Messers 5 wird der Stößel 50 an seinem rechten Ende entgegen der Kraft der Tellerfedern 64 in die Welle 15 eingedrückt, so daß die Bajonettstifte 41 aus den Vertiefungen 42 ausgehoben werden. Durch Verdrehen der Bajonettscheibe 34 können die Bajonettstifte 41 in den Bereich von Durchbrüchen 65 gebracht werden, so daß die Bajonettscheibe 34 abgezogen werden kann. Diese Messerhaltevorrichtung 1 hat den wesentlichen Vorteil, daß mit ihr extrem dünne Messer 5 mit einer Dicke von 0,05 bis 0,5 mm gespannt werden können.

## Patentansprüche

1. Messerhalter für kreismesser (5), mit einem Anstellarm (4) und einer daran drehbar festgelegten Messerhaltevorrichtung (1) für das Kreismesser (5), wobei die Messerhaltevorrichtung (1) einen eine Aufnahmeöffnung (24) des Kreismessers (5) durchgreifenden und zentrierenden Aufnahmedorn (8) mit einem Anlageflansch (7) für das Kreismesser (5) sowie einen das Kreismesser (5) zwischen sich und dem Anlageflansch (7) haltenden Schnellspannverschluß aufweist, wobei der Aufnahmedorn (8) drehbar am Anstellarm (4) gelagert ist, **dadurch gekennzeichnet**, daß der Schnellspannverschluß bzw. der Aufnahmedorn (8) das Kreismesser (5) hintergreifende, am Kreismesser (5) anliegende und dadurch gegen ein Abheben vom Anlageflansch (7) sichernde, radial verschiebliche Stifte (25) aufweist, die mittels einer Stellvorrichtung (16) in eine das Kreismesser (5) freigebende bzw. das Kreismesser festlegende Stellung bringbar sind.

2. Messerhalter nach Anspruch 1, dadurch gekennzeichnet, daß der Aufnahmedorn (8) eine zentrale Ausnehmung (18) aufweist, die zentrale Ausnehmung (18) von den das Messer (5) hintergreifenden Stiften (25) umgeben ist und in der Ausnehmung (18) die, insbesondere als in der Ausnehmung (18) drehbar gelagerte Welle (15) mit einem Polygonquerschnitt ausgebildete Stellvorrichtung (16) für die Stifte (25) vorgesehen ist, wobei insbesondere jede Ecke (29) des Polygons einem Stift (25) zugeordnet ist.

3. Messerhalter nach einem der vorhergehenden Ansprüche, dadurch gekennzeichnet, daß der Aufnahmedorn (8) das Messer (5) mit einem Abschnitt überragt, der im wesentlichen der Dicke der Stifte (25) entspricht, wobei der Abschnitt das Messer um 3 mm bis 8 mm, insbesondere um 4 mm überragt und/oder daß die Gesamtbreite (C) der Messerhaltevorrichtung (1) 30 mm bis 50 mm, insbesondere 39 mm beträgt.

4. Messerhalter für Kreismesser (5), mit einem Anstellarm (4) und einer daran drehbar festgelegten Messerhaltevorrichtung (1) für das Kreismesser (5), wobei die Messerhaltevorrichtung (1) einen eine Aufnahmeöffnung (24) des Kreismessers (5) durchgreifenden und zentrierenden Aufnahmedorn (8) mit einem Anlageflansch (7) für das Kreismesser (5) sowie einen das Kreismesser (5) zwischen sich und dem Anlageflansch (7) haltenden Schnellspannverschluß aufweist, wobei der Aufnahmedorn (8) über eine Welle (6) drehbar am Anstellarm (4) gelagert ist, dadurch gekennzeichnet, daß der Schnellsoannverschluß von einer das Kreismesser (5) hintergreifenden und am Kreismesser (5) anliegenden und diese an den Anlageflansch (7) pressenden und dadurch gegen ein Abheben vom Anlageflansch (7) sichernden Bajonettscheibe (34) und von Bajonettstiften (41) gebildet wird und die Bajonettscheibe (34) von den Bajonettstiften (41) radial hintergriffen wird, wobei die Bajonettstifte (41) von der Welle (6) getragen werden und radial über diese überstehen.

5. Messerhalter nach Anspruch 4, dadurch gekennzeichnet, daß die Bajonettscheibe (34) ein flexibles Auflager für unterschiedlich dicke Messer (19) bildet, wobei das Auflager insbesondere von mehreren federnd gelagerten Kugeln (43) gebildet wird.

6. Messerhalter für Kreismesser (5), mit einem Anstellarm (4) und einer daran drehbar festgelegten Messerhaltevorrichtung (1) für das Kreismesser (5), wobei die Messerhaltevorrichtung (1) einen eine Aufnahmeöffnung (24) des Kreismessers (5) durchgreifenden und zentrierenden Aufnahmedorn (8) mit einem Anlageflansch (7) für das Kreismesser (5) sowie einen das Kreismesser (5) zwischen sich und dem Anlageflansch (7) haltenden Schnellspannverschluß aufweist, wobei der Aufnahmedorn (8) über eine Welle (6) drehbar am Anstellarm (4) gelagert ist, dadurch gekennzeichnet, daß der Schnellspannverschluß als Krallenspanneinheit ausgebildet ist, die im wesentlichen radial ein- und ausfahrbare, am Kreismesser (5) anliegende und das Kreismesser (5) auf den Anlageflansch (7) pressende und dadurch gegen ein Abheben von Anlageflansch (7) sichernde Krallen (56) aufweist, und die Krallen (56) durch einen zur Welle (6) koaxialen Stößel (50) ein- und ausfahrbar sind.

7. Messerhalter nach Anspruch 6 oder 7, dadurch gekennzeichnet, daS der Stößel (50) axial verschiebbar und insbesondere über Federn, wie Tellerfedern in eine Ruhelage gedrängt ist.

8. Messerhalter nach Anspruch 6, dadurch gekennzeichnet, daß der Stößel (50) einen Spannkopf (51) trägt und daß der Spannkopf (51) die seinen Außenumfang überragende Krallen (56) aufweist, die über die Kraft des federbelasteten Stößels (50) das Messer (5) in einem Auflager der Messerhaltevorrichtung (1) fixieren.

9. Messerhalter nach einem der vorhergehenden Ansprüche, dadurch gekennzeichnet, daß der Anlageflansch (7) mit einem Permanentmagneten (22) für die Halterung des Messers (5) am Anlageflansch (7) versehen ist.

## Claims

1. Blade support for circular blades (5), comprising a positioning arm (4) and a blade support device (1) for the circular blade (5) rotatably mounted to the positioning arm, the blade support device (1) having a mandrel (8) which passes through and centres an opening (24) of the circular blade (5) having a bearing flange (7) for the circular blade (5) as well as a quick-action lock holding the circular blade (5) between the lock and the bearing flange (7), the mandrel (8) is rotatably mounted at the positioning arm (4), **characterized in that** the quick-action lock or the mandrel (8) includes radial displaceable pins (25) which engage the circular blade (5) from behind and lie against the circular blade (5) and which secure it against lifting from the bearing flange (7), the pins (25) being displaceable in a position releasing the circular blade (5) or in a position securing the circular blade (5) by an adjusting device (16).

2. Blade support according to claim 1, characterized in that the mandrel (8) has a central recess (18), that the central recess (18) is surrounded by the pins (25) engaging the circular blade (5) from behind and that the adjusting device (16) for the pins (25) is mounted in the recess (18), constructed especially as a shaft (15) rotatably mounted in the recess (18), the shaft having a polygonal cross section, especially with each corner (29) of the polygon associated with a pin (25).

3. Blade support according to one of the preceding claims, characterized in that the mandrel (8) extends beyond that circular blade (5) with a segment, that segment corresponding substantially to the thickness of the pins (25) and the segment extending beyond the circular blade (5) by 3 mm to 8 mm, especially by 4 mm, and/or that the width (C) of the blade support device (1) is 30 mm to 50 mm, especially 39 mm.

4. Blade support for circular blades (5), comprising a positioning arm (4) and a blade support device (1) for the circular blade (5) mounted rotatably to the positioning arm, the blade support device (1) having a mandrel (8) which passes through and centers an opening (24) of the circular blade (5) having a bearing flange (7) for the circular blade (5) as well as a quick-action lock holding the circular blade (5) between the lock and the bearing flange (7), the mandrel (8) is rotatably mounted at the positioning arm (4) by a shaft (6), characterized in that the quick-action lock comprises a bayonet plate (34) and bayonet pins (41), engaging the circular blade (5) from behind and lying against the circular blade (5) and pressing it against the bearing flange (7) and securing it against lifting from the bearing flange (7), and that the bayonet plate (34) is engaged from the bayonet pins (41) radially from behind, the bayonet pins (41) are supported by the shaft (6) and extend it radially.

5. Blade support according to claim 4, characterized in that the bayonet plate (34) comprises a flexible bed for a plurality of blades (5) of various thickness, the bed comprises especially a plurality of resilient support balls (43).

6. Blade support for circular blades (5), comprising a positioning arm (4) and a blade support device (1) for the circular blade (5) mounted rotatably to the positioning arm, the blade support device (1) having a mandrel (8) which passes through and centres an opening (24) of the circular blade (5) having a bearing flange (7) for the circular blade (5) as well as a quick-action lock holding the circular blade (5) between the lock and the bearing flange (7), the mandrel (8) is rotatably mounted at the positioning arm (4) by a shaft (6), characterized in that the quick-action lock comprises a clawed clamping unit, having substantially radially retractable and extensible claws (56) that lie against the circular blade (5) and press the circular blade (5) against the bearing flange (7) securing the circular blade (5) against lifting from the bearing flange (7), the claws (56) being retractable and extensible by a tappet (50) being coaxially to the shaft (6).

7. Blade support according to claim 6 or 7, characterized in that the tappet (50) is axially displaceable and especially held in a position of repose by springs, such as disc-springs.

8. Blade support according to claim 6, characterized in that the tappet (50) has a grip head (51) which includes claws (56) extending beyond the outer circumference of the grip head (51), the claws (56) fixing the circular blade (5) in a bed of the blade support device (1) via the force of the spring-loaded tappet (50).

9. Blade support according to one of the preceding claims, characterized in that the bearing flange (7) is provided with a permanent magnet (22) for holding the circular blade (5) at the bearing flange (7).

## Revendications

1. Support pour couteau circulaire (5), doté, pour ledit couteau circulaire (5), d'un bras de positionnement (4) et d'un dispositif de maintien de couteau (1) monté rotatif sur ce dernier, ledit dispositif de maintien de couteau (1) présentant un mandrin de réception (8) traversant au centre une ouverture de réception (24) du couteau circulaire (5) et doté d'une bride d'appui (7) pour le couteau circulaire (5), ainsi qu'un dispositif de serrage rapide maintenant le couteau circulaire (5) entre ledit dispositif de serrage rapide et la bride d'appui (7), le mandrin de réception (8) étant monté rotatif dans le bras de positionnement (4), caractérisé en ce que le dispositif de serrage rapide ou le mandrin de réception (8) présente des goupilles (25) déplaçables radialement, placées derrière le couteau circulaire (5), contre ce dernier et l'empêchant, de ce fait, de s'écarter de la bride d'appui (7), lesdites goupilles pouvant être mises dans une position de dégagement ou de blocage du couteau circulaire (5) par un dispositif de positionnement (16).

2. Support de couteau selon la revendication 1, caractérisé en ce que le mandrin de réception (8) présente un évidement central (18), en ce que l'évidement central (18) est entouré des goupilles (25) placées derrière le couteau (5) et en ce que dans l'évidement (18) est prévu un dispositif de positionnement (16) des goupilles (25), de section polygonale et se présentant, en particulier, sous la forme d'un axe logé rotatif (15) dans le logement (18), chaque coin (29) du polygone correspondant en particulier à une goupille (25).

3. Porte-couteau selon l'une des revendications précédentes, caractérisé en ce que le mandrin de réception (8) dépasse du couteau (5) d'une portion correspondant sensiblement à l'épaisseur des goupilles (25), ladite portion dépassant du couteau de 3 à 8 mm, en particulier de 4 mm et/ou en ce que la largeur totale (C) du dispositif de maintien du couteau (1) est comprise entre 30 et 50 mm et est, en particulier, égale à 39 mm.

4. Support pour couteau circulaire (5), doté, pour ledit couteau circulaire (5), d'un bras de positionnement (4) et d'un dispositif de maintien de couteau (1) monté rotatif sur ce dernier, ledit dispositif de maintien de couteau (1) présentant un mandrin de réception (8) traversant au centre une ouverture de réception (24) du couteau circulaire (5) et doté d'une bride d'appui (7) pour le couteau circulaire (5), ainsi qu'un dispositif de serrage rapide maintenant le couteau circulaire (5) entre ledit dispositif de serrage rapide et la bride d'appui (7), le mandrin de réception (8) étant monté rotatif dans le bras de positionnement (4) par l'intermédiaire d'un axe (6), caractérisé en ce que le dispositif de serrage rapide est constitué par des connecteurs de type baïonnette (41) et un contre-plateau type baïonnette (34) placé derrière le couteau circulaire (5), contre ce dernier et le plaquant contre la bride d'appui (7), l'empêchant ainsi de s'écarter de la bride d'appui (7), et en ce que les connecteurs de type baïonnette (41) passent radialement derrière le contre-plateau type baïonnette (34), les connecteurs de type baïonnette (41) étant supportés par l'axe (6) et dépassant radialement de ce dernier.

5. Support de couteau selon la revendication 4, caractérisé en ce que le contre-plateau type baïonnette (34) forme un appui flexible pour des couteaux (19) de diverses épaisseurs, ledit appui étant formé en particulier de plusieurs billes (43) logées de manière élastique.

6. Support pour couteau circulaire (5), doté, pour ledit couteau circulaire (5), d'un bras de positionnement (4) et d'un dispositif de maintien de couteau (1) monté rotatif sur ce dernier, ledit dispositif de maintien de couteau (1) présentant un mandrin de réception (8) traversant au centre une ouverture de réception (24) du couteau circulaire (5) et doté d'une bride d'appui (7) pour le couteau circulaire (5), ainsi qu'un dispositif de serrage rapide maintenant le couteau circulaire (5) entre ledit dispositif de serrage rapide et la bride d'appui (7), le mandrin de réception (8) étant monté rotatif dans le bras de positionnement (4) par l'intermédiaire d'un axe (6), caractérisé en ce que le dispositif de serrage rapide se présente sous la forme d'une unité de serrage par griffes (56) qui présente des griffes (56) rétractables et extensibles selon une direction sensiblement radiale, lesdites griffes étant en contact avec le couteau circulaire (5) et plaquant ledit couteau circulaire (5) contre la bride d'appui (7), l'empêchant ainsi de s'écarter de ladite bride d'appui (7), et en ce que les griffes (56) sont rétractables et extensibles au moyen d'un poussoir (50) coaxial à l'axe (6).

7. Support de couteau selon la revendication 6 ou 7, caractérisé en ce que le poussoir (50) est déplaçable axialement et peut en particulier être repoussé dans une position de repos au moyen de ressorts, tels que des rondelles Belleville.

8. Support de couteau selon la revendication 6, caractérisé en ce que le poussoir (50) porte une tête de serrage (51) et en ce que ladite tête de serrage (51) porte les griffes (56) qui dépassent de son pourtour externe et qui plaquent le couteau (5) en appui sur le dispositif de maintien de couteau (1) grâce à la force du poussoir (50) chargé par ressort.

9. Support de couteau selon l'une des revendications précédentes, caractérisé en ce que la bride d'appui (7) est dotée d'un aimant permanent (22) pour le maintien du couteau (5) contre la bride d'appui (7).
